(19) Europäisches Patentamt
European Patent Office
Office européen des brevets

(11) **EP 4 202 001 B1**

(12) **EUROPÄISCHE PATENTSCHRIFT**

(45) Veröffentlichungstag und Bekanntmachung des Hinweises auf die Patenterteilung:
**02.10.2024 Patentblatt 2024/40**

(21) Anmeldenummer: **21216567.4**

(22) Anmeldetag: **21.12.2021**

(51) Internationale Patentklassifikation (IPC):
**C09D 163/00** (2006.01)   **C01B 32/159** (2017.01)
**C08K 3/04** (2006.01)

(52) Gemeinsame Patentklassifikation (CPC):
(C-Sets verfügbar)
**C01B 32/168; C08G 59/50; C09D 163/00;**
C01B 2202/02; C01B 2202/34; C01B 2202/36;
C08K 2201/003; C08K 2201/004        (Forts.)

(54) **2K-BESCHICHTUNGSSET, UMFASSEND EINE EPOXIDHARZ-KOMPONENTE UND EINE HÄRTER-KOMPONENTE, BESCHICHTUNGSZUSAMMENSETZUNG, BESCHICHTUNG, BESCHICHTUNGSSYSTEM, VERWENDUNG DES 2K-BESCHICHTUNGSSETS UND DER BESCHICHTUNGSZUSAMMENSETZUNG SOWIE VERFAHREN ZUR HERSTELLUNG DER BESCHICHTUNGSZUSAMMENSETZUNG**

2K COATING KIT COMPRISING AN EPOXY RESIN COMPONENT AND A CURING COMPONENT, COATING COMPOSITION, COATING, COATING SYSTEM, USE OF THE 2K COATING KIT AND THE COATING COMPOSITION, AND METHOD FOR PRODUCING THE COATING COMPOSITION

ENSEMBLE DE REVÊTEMENTS 2K COMPRENANT UN COMPOSANT DE RÉSINE ÉPOXY ET UN COMPOSANT DURCISSEUR, COMPOSITION DE REVÊTEMENT, REVÊTEMENT, SYSTÈME DE REVÊTEMENT, UTILISATION DE L'ENSEMBLE DE REVÊTEMENTS 2K ET DE LA COMPOSITION DE REVÊTEMENT, AINSI QUE PROCÉDÉ DE FABRICATION DE LA COMPOSITION DE REVÊTEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**28.06.2023 Patentblatt 2023/26**

(73) Patentinhaber: **DAW SE**
**64372 Ober-Ramstadt (DE)**

(72) Erfinder: **ZEIN, Alexander**
**64380 Roßdorf (DE)**

(74) Vertreter: **Metten, Karl-Heinz**
**Boehmert & Boehmert**
**Anwaltspartnerschaft mbB**
**Pettenkoferstrasse 22**
**80336 München (DE)**

(56) Entgegenhaltungen:
CN-A- 106 010 126        DE-A1- 102006 015 774
DE-A1- 102018 009 794    KR-A- 20130 007 856

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C09D 163/00, C08K 3/041**

**Beschreibung**

Die vorliegende Erfindung betrifft ein 2K-Beschichtungsset, umfassend eine Epoxidharz-Komponente und eine Härter-Komponente, eine Beschichtungszusammensetzung erhalten durch Vermischen der Epoxidharz- und der Härter-Komponente des erfindungsgemäßen 2K-Beschichtungssets, eine Beschichtung, erhalten durch Auftragen der erfindungsgemäßen Beschichtungszusammensetzung, die Verwendung des erfindungsgemäßen 2K-Beschichtungssets oder der erfindungsgemäßen Beschichtungszusammensetzung für die Herstellung einer Fußbodenbeschichtung sowie eine Verfahren zur Herstellung einer erfindungsgemäßen Beschichtungszusammensetzung. Außerdem betrifft die Erfindung ein mehrlagiges Beschichtungssystem, enthaltend eine erfindungsgemäße Beschichtung.

Elektrostatische Auf- und Entladungen treten nahezu überall auf. Für Personen können diese ab einem Wert von etwa 10 kV zu gesundheitlichen Problemen, wie Kopfschmerzen, Übelkeit oder Taubheitsgefühlen führen, bei höheren Werten im schlimmsten Fall sogar zu Atemlähmung oder einem Herzstillstand. Doch auch in insbesondere explosionsgeschützten Bereichen können elektrostatische Auf- und Entladungen Brände, insbesondere im Zusammenhang von brennbaren Flüssigkeiten oder Gasen, oder Explosionen, insbesondere in Kombination mit trockenem Schüttgut, zur Folge haben. Auch elektronische Bauelemente sind besonders anfällig für Schäden hervorgerufen durch elektrostatische Entladung.

Vor allem bei senkrecht zur Schwerkraft ausgerichteten Oberflächen, wie beispielsweise Gebäudeoberflächen, insbesondere Bodenbelägen, kann das natürliche elektrische Feld der Erde beachtliche Werte annehmen, was bei Reibung, wie beispielsweise beim Laufen über diese Bodenbeläge ohne Sicherheitsschuhe, zu einer enormen Aufladung führen kann.

Demnach besteht ein großer Bedarf an ESD (*"ElectroStatic Discharge"*)-*Schutz* zur Vermeidung bzw. Minimierung unvermeidbarer Aufladungen, wie beispielsweise Ableiten oder Erdung. ESD-Bodenbeläge besitzen ausreichende Leitfähigkeit, wobei in der Praxis meist Fußböden mit einem Ableitwiderstand von etwa 1 MΩ zum Einsatz kommen. Je nach Anwendung können die Bodenbeläge mit einer leitfähigen Schicht in Form von Platten, Rollware, Beschichtungen oder Lackierungen ausgestattet werden. Aufgrund ihrer minimalen Schichtstärke sind vor allem Beschichtungen vielseitig einsetzbar, die leitfähige Komponenten enthalten, um den Bodenbelag ableitfähig zu machen.

Als leitfähige Komponenten in der Herstellung von Beschichtungszusammensetzungen sind ionische Flüssigkeiten aus dem Stand der Technik bekannt. Diese weisen jedoch den Nachteil auf, dass ihre Leitfähigkeit in dem vollständig ausgehärteten Endprodukt, der Beschichtung, immens abnimmt. Weiterhin ist die Leitfähigkeit der eingearbeiteten ionischen Flüssigkeiten stark von der relativen Luftfeuchtigkeit in der Umgebung bzw. dem jeweiligen Raumklima abhängig, was deren Wirksamkeit schwer vorhersagbar macht. Weiterhin hat sich gezeigt, dass diese ionischen Flüssigkeiten, insbesondere durch die Reinigung der Böden, nach und nach ausgewaschen werden.

Alternative leitfähige Komponenten stellen auf Ruß, Kohlenstofffasern und/oder leitfähige Füllstoffe, wie Siliciumcarbide oder Schichtsilikate ab. Vor allem Kohlenstoffnanoröhrchen (CNT) kommen aufgrund ihrer geringen Dichte und hohen Zugfestigkeit immer mehr zum Einsatz. Gerade im Hinblick auf die ESD-Anforderungen bestechen sie durch ihre hohe Strombelastbarkeit und Wärmeleitfähigkeit. Diese alternativen leitfähigen Komponenten zeigen demgemäß Vorteile gegenüber ionischen Flüssigkeiten, führen jedoch regelmäßig ausschließlich zu Bodenbeschichtungen mit intensiv dunkler Eigenfarbe. Hierdurch wird der Einsatz dieser Beschichtungen beschränkt. Inzwischen gibt es einige Ansätze, Systeme zu entwickeln, welche die vorangehenden Nachteile umgehen sollen. So offenbart die EP 3 670 470 A1 Beschichtungszusammensetzungen zur Beschichtung von Bodenflächen, umfassend ein organisches Bindemittel, Füllstoffe und/oder Pigmente und funktionale Fasern, wie beispielsweise SWCNT, wobei die Füllstoffe und/oder Pigmente eine Rohdichte größer 3,8 kg/dm$^3$ und die funktionalen Fasern eine Rohdichte zwischen 1,0 kg/dm$^3$ und 2,0 kg/dm$^3$ aufzuweisen haben. Die RU 2 654 759 C1 beschreibt einen Bodenbelag enthaltend härtbares Harz in Form eines Epoxidharzes und einen Füllstoff in Form einwandiger Kohlenstoff-Nanoröhren in einer Menge von 0,001 bis 0,5 Gew.-%.

Aus der EP 3 652 252 B1 geht ein Beschichtungssystem hervor, umfassend ein Reaktionsharzsystem, ein Thixotropierhilfsmittel umfassend Harnstoffzubereitungen und/oder Fasern sowie einen anorganischen Zuschlagstoff mit einer Partikelgröße im Bereich von 0.2 bis 3.0 mm. Das Beschichtungssystem soll drei Minuten nach dem Mischen aller Komponenten mit Ausnahme des anorganischen Zuschlagstoffs eine Viskosität von 9000 - 100000 Pas, gemessen mit einer Scherrate von 1 s-1, und eine Viskosität von 400 - 15000 Pas, gemessen mit einer Scherrate von 100 s-1, aufweisen. Auf diese Weise sollen Bodenbeschichtungssysteme mit ausgeprägter Oberflächenrauigkeit bereitgestellt werden.

Die EP 2 755 451 A1 und die EP 2 944 162 B1 stellen ab auf ein Beschichtungssystem auf einem Untergrund zum Schutz vor elektrostatischer Entladung, umfassend in dieser Reihenfolge a) eine Grundierung, b) eine nicht ableitfähige Kunstharzschicht und c) eine ableitfähige Kunstharzschicht mit einem Erdableitwiderstand nach VDE-0100-410 von mindestens 100 kOhm. Hierbei hat zwischen der ableitfähigen Kunstharzschicht und der nicht ableitfähigen Kunstharzschicht eine Erdungseinrichtung zur Erdung des Beschichtungssystems angeordnet zu sein. Mit diesen Beschichtungssystemen sollen ein guter ESD-Schutz, Personenschutz nach VDE 0100-410, niedrige VOC-Werte, gute Systemrobustheit, schnelle Einbauzeiten und eine gute Flexibilität beim Aufrüsten bereits bestehender Beschichtungen zu ESD-Beschichtungen einhergehen.

Die DE 10 2018 009 794 A1 beschreibt eine Beschichtungszusammensetzung zur Beschichtung von im Wesentlichen senkrecht zur Schwerkraftrichtung ausgerichteten Bodenflächen, umfassend ein organisches Bindemittel, Füllstoffe und/oder Pigmente und funktionale Fasern, wobei die Füllstoffe und/oder Pigmente eine Rohdichte größer 3,8 kg/dm³ und eine Ölzahl kleiner/gleich 25g/100g aufzuweisen und die Rohdichte der funktionalen Fasern zwischen 1,0 kg/dm³ und 2,0 kg/dm³ zu liegen hat. Diese Beschichtungszusammensetzungen sollen elektrisch ableitfähige Bodenflächen mit anisotropen Eigenschaften der Beschichtung ermöglichen.

Es hat sich gezeigt, dass bei der Herstellung von ableitfähigen Beschichtungssystemen unter Einsatz von Kohlenstoffnanoröhrchen deren Einarbeitung in die Beschichtungsmassen aufwendig und nicht trivial und daher nicht selten mit Fehlern behaftet ist.

Die aus dem Stand der Technik bekannten Systeme sind demnach noch stets mit Nachteilen behaftet.

Der vorliegenden Erfindung lag daher die Aufgabe zugrunde, die Nachteile des Stands der Technik zu überwinden und insbesondere ein vereinfachtes effizientes und kostengünstiges Verfahren zur Herstellung von Beschichtungszusammensetzungen bereitzustellen, welches zuverlässig Beschichtungen mit dauerhaft guten Ableitfähigkeiten liefert.

Demgemäß wurde ein 2K-Beschichtungsset gefunden, umfassend eine Epoxidharz-Komponente und eine Härter-Komponente, enthaltend mindestens einen Epoxidharz-Härter und Single-Wall-Kohlenstoffnanoröhrchen und/ oder Multi-Wall-Kohlenstoffnanoröhrchen, bevorzugt Single-Wall-Kohlenstoffnanoröhrchen und besonders bevorzugt Single-Wall-Kohlenstoffnanoröhrchen und keine Multi-Wall-Kohlenstoffnanoröhrchen. Die Härter-Komponente kann erfindungsgemäß mindestens einen Epoxidharz-Härter und Single-Wall-Kohlenstoffnanoröhrchen, mindestens einen Epoxidharz-Härter und Multi-Wall-Kohlenstoffnanoröhrchen oder mindestens einen Epoxidharz-Härter und Single-Wall-Kohlenstoffnanoröhrchen und Multi-Wall-Kohlenstoffnanoröhrchen enthalten. Bevorzugt wird auf solche Härter-Komponenten zurückgegriffen, die Single-Wall-Kohlenstoffnanoröhrchen und keine Multi-Wall-Kohlenstoffnanoröhrchen oder Multi-Wall-Kohlenstoffnanoröhrchen nur in Mengen von weniger als 10 Gew.-%, bezogen auf das Gesamtgewicht von Single-Wall-Kohlenstoffnanoröhrchen und Multi-Wall-Kohlenstoffnanoröhrchen, aufweisen. Es hat sich überraschend gezeigt, dass die Einarbeitung von Kohlenstoffnanoröhrchen in den Epoxidharzhärter bei Verwendung von Single-Wall-Kohlenstoffnanoröhrchen mit einem geringen Arbeits- und Zeitaufwand verbunden ist als bei Verwendung bzw. Mitverwendung von Multi-Wall-Kohlenstoffnanoröhrchen.

Unter einem ein 2K-Beschichtungsset im Sinne der vorliegenden Erfindung soll ein solches ein Beschichtungsset verstanden werden, das mindestens die Epoxidharz-Komponente und die Härter-Komponente aufweist, das darüber hinaus gegebenenfalls auch weitere Beschichtungsset-Komponenten enthalten kann. Bevorzugt stellt das erfindungsgemäße 2K-Beschichtungsset ein solches Beschichtungsset dar, das aus der Epoxidharz-Komponente und der Härter-Komponente, wie jeweils hierin offenbart, besteht. Allerdings ist es z.B. auch möglich, einzelne Bestandteile der Epoxidharz-Komponente, z.B. Füllstoffe, und/oder der Härter-Komponente, z.B. Amine und Benzylalkohol, zunächst separat zu halten und sodann zur Ausbildung der Beschichtungszusammensetzung zuzugeben. Auch derartige Systeme sollen als 2K-Beschichtungsset im Sinne der vorliegenden Erfindung verstanden werden. Ein 2K-Beschichtungsset im Sinne der vorliegenden Erfindung kann demgemäß auch als Mehrkomponenten-Beschichtungsset bezeichnet werden, das in einer bevorzugten Ausführungsform ein Beschichtungsset bestehend aus den zwei Komponenten Epoxidharz-Komponente und Härter-Komponente darstellt. Der Begriff Beschichtungsset kann im Sinne der vorliegenden Erfindung auch als Kit-of-parts verstanden werden bzw. stellt ein solches dar.

Bei der Epoxidharz-Komponente handelt es sich bevorzugt um eine nicht oder nicht vollständig ausgehärtete Epoxidharz-Komponente, die flüssig oder verflüssigbar ist. Für derartige Epoxidharz-Komponenten greift man dabei insbesondere auf Bisphenol und mindestens eine Epoxidverbindung, insbesondere Epichlorhydrin, zurück. Unter den Bisphenolen sind Bisphenol A und Bisphenol F, alleine oder in Kombination, bevorzugt. Besonders bevorzugt kommen hierbei Bisphenol A und Bisphenol F gemeinsam zum Einsatz. Geeignete Bisphenole können grundsätzlich ausgewählt werden aus der Gruppe bestehend aus Bisphenol A, Bisphenol F, Bisphenol AF, Bisphenol B, Bisphenol C, Bisphenol E und deren beliebigen Mischungen. In einer besonders geeignete Ausführungsformen wird die Epoxidharz-Komponente gebildet aus den Komponenten Diglycidylether und Bisphenol A und/oder Bisphenol F, insbesondere Diglycidylether und Bisphenol A und Bisphenol F.

Für viele Anwendungen hat es sich als zweckmäßig erwiesen, dass Füllstoffe, Pigmente, Farbstoffe und/oder Fasern Bestandteil der Epoxidharz-Komponente sind. Geeignete Fasern umfassen Carbon-, Polymer-, Glas- und/oder Mineralfasern oder stellen diese dar. Im Sinne der vorliegenden Erfindung stellen Single-Wall-Kohlenstoffnanoröhrchen und Multi-Wall-Kohlenstoffnanoröhrchen keine Fasern dar.

Auch enthält die Epoxidharz-Komponente bevorzugt ebenfalls Benzylalkohol und/oder Phenoxyethanol, wobei Benzylalkohol besonders bevorzugt ist. Mit den genannten Alkoholen, insbesondere Benzylalkohol, gehen regelmäßig verbesserte Verarbeitungs- und Fließeigenschaften einher. Auch tragen diese mitunter zu einer leichteren Herbeiführung einer vollständigen Aushärtung bei. Alternativ kann die Epoxidharz-Komponente auch frei von Benzylalkohol und/oder Phenoxyethanol wie auch frei von Benzylalkohol und Phenoxyethanol sowie in einer weiteren Ausführungsform frei von Alkoholen sein.

Der Epoxidharz-Härter umfasst, bevorzugt besteht aus einem oder mehreren Aminen. Hierbei kommen im Allgemeinen mehrwertige aromatische und aliphatische Amine wie Diamine, Triamine, Tetraamine, Polyamine, Amin-Addukt und/oder Polyamin-Addukte zum Einsatz. Alternativ oder zusätzlich kann auch auf Polyoxyalkylendiamin, Polyamidoamin, Mannich-Basen, hergestellt durch Kondensation von einem Phenol, einem Amin und Formaldehyd, transaminierte Mannich-Basen und deren beliebige Mischungen zurückgegriffen werden. Exemplarisch seien als geeignete Amine Aminoethylpiperazin (AEP), 1,3-Benzoldimethanamin (MXDA) und/oder Isophorondiamin (IPDA), 1,3-Diaminobenzol, Diethylentriamin, Triethylentetramin, Tetraethylenpentamin, 2,2,4-Trimethylhexamethylendiamin, 2,4,4-Trimethylhexamethylendiamin, 1,3-Bis(aminomethyl)cyclohexan, 4,4'-Methylenebis(cyclohexylamin), Poly[oxy(methyl-1,2-ethanediyl)], $\alpha$-(2-Aminomethylethyl)- $\omega$-(2-aminomethylethoxy)- (Jeffamine D-230) und deren beliebigen Mischungen genannt.

Der Epoxidharz-Härter kann ebenfalls Additive wie Entschäumer, Emulgatoren, Thixotropiermitteln und/oder Filmbildehilfsmittel, Beschleuniger und/oder Lösungsmittel enthalten.

In einer besonders bevorzugten Ausführungsform enthalten die Epoxidharz-Komponente und/oder die Härter-Komponente mindestens einen Reaktivverdünner. Dieser Reaktivverdünner liegt bevorzugt in der Epoxidharz-Komponente und besonders bevorzugt in der Epoxidharz-Komponente und nicht in der Härter-Komponente vor.

Durch Mitverwendung von Reaktivverdünnern erreicht man besonders zuverlässig eine gleichmäßige Verteilung der Komponenten und eine damit einhergehende homogene Mischung in den aus dem erfindungsgemäßen 2K-Beschichtungsset erhältlichen Beschichtungszusammensetzungen.

Geeignete Reaktivverdünner können dabei ausgewählt sein aus der Gruppe bestehend aus Monoacrylsäureestern, insbesondere Octylacrylat, Decylacrylat, Phenoxyethylacrylat, Norbonylacrylat und/oder Dicyclopentadienylacrylat; polyfunktionellen Acrylestern von Polyalkoholen, insbesondere Hexandioldiacrylat, Trimethylolpropantriacrylat, Pentaerythrittriacrylat und/oder Pentaerythrittetraacrylat; Acrylestern mehrfunktioneller Polyetheralkohole, insbesondere Diethylenglykolacrylat und/oder Dipropylenglykoldiacrylat; Acrylsäureestern von ethoxyliertem Glycerin; Acrylsäureestern von Trimethylolpropan; Acrylsäureestern von Di-Trimethylolpropan; Acrylsäureestern von Pentaerythrit; Acrylsäureestern von Dipentaerythrit; Vinylether, insbesondere Diethylenglycolvinylether und/oder Triethylenglykoldivinylether; N-Vinylverbindungen, insbesondere N-Vinylpyrrolidon, N-Vinylimidazol und/oder N-Vinylcaprolactam; Alkylglycidylether, insbesondere 1,6-Hexandioldiglycidylether, $C_{12-14}$-Glycidylether und/oder $C_{13-15}$-Glycidylether; Alkaryllycidylether, insbesondere p-tert-Butylphenylglycidylether und/oder Cresylglycidylether; und beliebigen Mischungen hiervon.

Die Single-Wall-Kohlenstoffnanoröhrchen verfügen bevorzugt über eine durchschnittliche Länge, insbesondere absolute Länge, im Bereich von 1 bis 50 $\mu$m, besonders bevorzugt 2 bis 40 $\mu$m. Besonders geeignete Single-Wall-Kohlenstoffnanoröhrchen sind darüber hinaus, insbesondere zusätzlich, mit einem durchschnittlichen Durchmesser, insbesondere einem absoluten Durchmesser, von weniger als 10 nm, bevorzugt weniger als 6 nm und besonders bevorzugt im Bereich von 0,2 bis 5 nm, ausgestattet. Ferner besitzen besonders geeignete Single-Wall-Kohlenstoffnanoröhrchen, insbesondere zusätzlich, eine Dichte im Bereich von 1,0 bis 2,0 $g/cm^3$, insbesondere im Bereich von 1,3 bis 1,4 $g/cm^3$.

Die Multi-Wall-Kohlenstoffnanoröhrchen verfügen bevorzugt über einen durchschnittlichen Durchmesser, insbesondere einen absoluten Durchmesser, im Bereich von 20 bis 80 $\mu$m, besonders bevorzugt im Bereich von 30 bis 70 $\mu$m und insbesondere im Bereich von 40 bis 60 $\mu$m. Besonders geeignete Multi-Wall-Kohlenstoffnanoröhrchen sind darüber hinaus, insbesondere zusätzlich, mit einer durchschnittlichen Länge, insbesondere absoluten Länge, im Bereich von 100 bis 500 $\mu$m, bevorzugt 150 bis 300 $\mu$m, ausgestattet. Ferner besitzen besonders geeignete Multi-Wall-Kohlenstoffnanoröhrchen, insbesondere zusätzlich, eine Dichte im Bereich von 1,0 bis 3,0 $g/cm^3$, insbesondere im Bereich von 1,5 bis 2,5 $g/cm^3$.

Die Härter-Komponente des erfindungsgemäßen 2K-Beschichtungsset erhält man gemäß einer besonders zweckmäßigen Ausführungsform durch Vermengen, insbesondere Dispergieren, der Single-Wall-Kohlenstoffnanoröhrchen und/ oder Multi-Wall-Kohlenstoffnanoröhrchen, insbesondere der Single-Wall-Kohlenstoffnanoröhrchen, mit dem mindestens einen Epoxidharz-Härter, insbesondere Amin, unter Ausbildung einer Suspension. Bevorzugt vermengt man dabei Single-Wall-Kohlenstoffnanoröhrchen und/oder Multi-Wall-Kohlenstoffnanoröhrchen, insbesondere Single-Wall-Kohlenstoffnanoröhrchen, in Form einer Lösungsmittel-Suspension vorliegend, vorzugsweise in einem aprotischen polaren Lösungsmittel, insbesondere Propylenglykol, mit dem Epoxidharz-Härter, insbesondere in Form eines Amins. In dieser Lösungsmittel-Suspension liegen die Single-Wall-Kohlenstoffnanoröhrchen und/oder Multi-Wall-Kohlenstoffnanoröhrchen, insbesondere Single-Wall-Kohlenstoffnanoröhrchen, bevorzugt in einer Menge im Bereich von 2 bis 20 Gew.-%, bevorzugt 5 bis 15 Gew.-%, dispergiert vor. Bevorzugt arbeitet man eine Suspension enthaltend 2 bis 20 Gew.-%, bevorzugt 5 bis 15 Gew.-%, Single-Wall-Kohlenstoffnanoröhrchen in einem aprotischen polaren Lösungsmittel, insbesondere Propylenglykol, in das Amin des Epoxidharz-Härters ein bzw. vermengt diese Komponenten. Für diesen Mischvorgang können dem Fachmann bekannte Dissolver, auch Scheibenrührer genannt, eingesetzt werden. Alternativ kann die Lösungsmittel-Suspension der Single-Wall-Kohlenstoffnanoröhrchen und/oder Multi-Wall-Kohlenstoffnanoröhrchen, insbesondere Single-Wall-Kohlenstoffnanoröhrchen, auch zunächst in einen Anteil an Epoxidharz-Härter, insbesondere Amin, eingearbeitet werden. Die erhaltene Suspension kann sodann mit dem verbleibenden Anteil an Epoxidharz-Härter, insbesondere Amin, vermengt werden. Der Anteil der Single-Wall-Kohlenstoffnanoröhrchen und/oder Multi-Wall-Kohlenstoffnanoröhrchen, insbesondere Single-Wall-Kohlenstoffnanoröhrchen, in der Härter-Komponente, insbesondere der Aminhärter-Komponente, liegt insbesondere nicht oberhalb von 1,5 Gew.-%, bevorzugt nicht oberhalb von 0,5 Gew.-% und besonders bevorzugt nicht oberhalb von 0,1 Gew.-%, liegt, bezogen auf das Gesamtgewicht der Härter-Komponente.

Mit dem erfindungsgemäßen 2K-Beschichtungsset ermöglicht man einen sehr effizienten Zugang zu elektrisch ableitfähigen Beschichtungen, in denen die Single-Wall-Kohlenstoffnanoröhrchen und/oder die Multi-Wall-Kohlenstoffnanoröhrchen, insbesondere die Single-Wall-Kohlenstoffnanoröhrchen, sehr gleichmäßig eingearbeitet sind bzw. sehr gleichmäßig verteilt vorliegend.

Die der Erfindung zugrunde liegende Aufgabe wird des Weiteren gelöst durch eine Beschichtungszusammensetzung erhalten oder erhältlich durch Vermischen der vorangehend beschriebenen Epoxidharz-Komponente und der vorangehend beschriebenen mindestens einen Härter-Komponente des erfindungsgemäßen 2K-Beschichtungssets.

Mit dem erfindungsgemäßen 2K-Beschichtungsset ist es möglich, zu erfindungsgemäßen Beschichtungszusammensetzungen zu gelangen, die sogenannte *"Total Solid"*-Beschichtungszusammensetzungen gemäß dem Prüfverfahren zur Bestimmung des Masseverlustes der Deutschen Bauchemie e.V. (in Anlehnung an DIN 16945, Ziffer 4.8 - Masseverlust) darstellen. Bei *"Total Solid"*-Beschichtungszusammensetzungen im Sinne der vorliegenden Erfindung handelt es sich demgemäß um solche Zusammensetzungen, bei denen der "Masseverlust I" ≤ 1 % und der "Masseverlust II" ≤ 2 % ist, wobei der "Masseverlust I" und der "Masseverlust II" in Anlehnung an DIN 16945, Ziffer 4.8, wie folgt bestimmt werden: etwa 10 g der erfindungsgemäßen Beschichtungszusammensetzung (Einwaage $M_E$) werden in einen Blechdeckel mit ebenem Boden (75 mm ± 5 mm Durchmesser, mit etwa 12 mm Randhöhe) auf 1 mg eingewogen und 24 Stunden bei 23 ± 1 °C und 50 ± 2 % rel. Feuchte gelagert und anreagiert. Danach erfolgt die Bestimmung der Masse $M_{A1}$. Der Masseverlust in % ist dann:

$$\text{Masseverlust I} = ((M_E - M_{A1})/\ M_E) \times 100.$$

Anschließend wird die Probe 24 Stunden bei 80 ± 2 °C gelagert. Nach Abkühlen auf Raumtemperatur (23 ± 1 °C) wird zurückgewogen (Auswaage $M_{A2}$). Der Masseverlust in % ist dann:

$$\text{Masseverlust II} = ((M_E - M_{A2})/\ M_E) \times 100.$$

Hierbei sind jeweils drei Proben von einer Mischung einer erfindungsgemäßen Beschichtungszusammensetzung herzustellen und zu vermessen. Aus den erhaltenen Daten ist der Mittelwert zu bilden.

Die zugrunde liegende Aufgabe wird auch besonders zuverlässig und gut durch solche erfindungsgemäßen Beschichtungszusammensetzungen gelöst, die nicht mehr als 3000 ppm, bevorzugt nicht mehr als 1000 ppm und besonders bevorzugt nicht mehr als 250 ppm, an Single-Wall-Kohlenstoffnanoröhrchen und/ oder Multi-Wall-Kohlenstoffnanoröhrchen, insbesondere der Single-Wall-Kohlenstoffnanoröhrchen, enthalten, wobei Gehalte im Bereich von 10 bis 500 ppm, insbesondere 30 bis 250 ppm, bevorzugt 40 bis 150 ppm und besonders bevorzugt 50 bis 110 ppm besonders geeignet sind.

Die der Erfindung zugrunde liegende Aufgabe wird ebenfalls gelöst durch Beschichtungen, erhalten oder erhältlich durch Auftragen der erfindungsgemäßen Beschichtungszusammensetzung auf eine Substratoberfläche. Bei der erfindungsgemäßen Beschichtung handelt es sich bevorzugt um eine elektrisch ableitfähige Beschichtung, insbesondere Fußbodenbeschichtung. Erfindungsgemäße elektrisch ableitfähige Beschichtungen weisen bevorzugt einen Erdableitwiderstand (Leitfähigkeit) Rg < $10^9$ Ω und eine Personenaufladung (maximal erzeugte Körperspannung) < 100 V, bestimmt gemäß DIN EN 61340-5-1 (VDE 0300-5-1):2017-07, auf.

Durch Verwendung des erfindungsgemäßen 2K-Beschichtungssets ist es möglich, zu solchen erfindungsgemäßen Beschichtungen zu gelangen, die einen Helligkeitswert (dies ist der Normfarbwert Y nach CIE) im Bereich von 1 bis 80, bevorzugt im Bereich von 3 bis 70 und besonders bevorzugt im Bereich von 5 bis 60, bestimmt gemäß Farbtonmessung nach CIELab, wie in "Coloristik für Lackanwendungen" von Tasso Bräule, Seiten 32 ff, Hannover, Deutschland, 2012, Vincentz Network, beschrieben, aufweisen. Für die Farbtonmessung nach CIELab kann auf die Publikation von Herrn Tasso Bräule (2012), "Coloristik für Lackanwendungen" (S. 32ff), Hannover, Deutschland, Vincentz Network, zurückgegriffen werden. Im Übrigen ist dem Fachmann die Bestimmung von CIELab-Werten geläufig. Mit der vorliegenden Erfindung werden somit auch ausgehärtete Beschichtungen zugänglich, die trotz der intensiv dunklen Eigenfarbe der Single-Wall- und Multi-Wall-Kohlenstoffnanoröhrchen eine hohe Farbtonvielfalt, insbesondere auch im Bereich der hellen Farbtöne, zulassen.

Die erhaltenen erfindungsgemäßen Beschichtungen zeichnen sich auch dadurch aus, dass sie nach der Aushärtung ihre volle Funktionsfähigkeit dauerhaft beibehalten. Sie weisen in besonders zweckmäßigen Ausgestaltungen eine Schichtstärke im Bereich von 0,5 bis 2,0 mm auf. Die erfindungsgemäßen Beschichtungen können ohne weiteres für explosionsgefährdete Bereiche, z.B. solche gemäß DIN EN 1801:1999-02, für Bereiche mit Schutzanforderung gegenüber elektronischen Bauteilen, insbesondere nach DIN EN 61340-5-1:2017-07 und DIN EN 61340-4-5:2019-04, eingesetzt werden.

Der Gehalt an Single-Wall-Kohlenstoffnanoröhrchen und/ oder Multi-Wall-Kohlenstoffnanoröhrchen, insbesondere der Single-Wall-Kohlenstoffnanoröhrchen, in den erfindungsgemäßen Beschichtungen liegt in einer zweckmäßigen Ausführungsform im Bereich von $1 \times 10^{-3}$ bis $5 \times 10^{-2}$ Gew.-%, insbesondere im Bereich von $3 \times 10^{-3}$ bis $2,5 \times 10^{-2}$ Gew.-%, bevorzugt im Bereich von $4 \times 10^{-3}$ bis $1,5 \times 10^{-2}$ Gew.-% und besonders bevorzugt im Bereich von $5 \times 10^{-3}$ bis $1,1 \times 10^{-2}$ Gew.-%, bezogen auf das Gesamtgewicht der Beschichtung. Mit Blick auf derartige Gehalte an Kohlenstoffnanoröhrchen gelangt man besonders gut und zuverlässig zu Beschichtungszusammensetzungen, die selbstnivellierend sind und die Beschichtungen liefern, die gleichwohl noch eine hinreichende Leitfähigkeit aufweisen.

Mit den erfindungsgemäßen 2K-Beschichtungssets bzw. mit den erfindungsgemäßen Beschichtungszusammensetzungen lassen sich unproblematisch Fußbodenbeschichtungen, insbesondere elektrisch ableitfähige Fußbodenbeschichtungen herstellen.

Die der Erfindung zugrunde liegende Aufgabe wird des Weiteren gelöst durch ein Verfahren zur Herstellung einer erfindungsgemäßen Beschichtungszusammensetzung, umfassend die Schritte

a) Zurverfügungstellung einer Epoxidharz-Komponente,

b) Zurverfügungstellung von Single-Wall-Kohlenstoffnanoröhrchen, insbesondere in Form einer Suspension in einem aprotischen polaren Lösungsmittel,

c) Zurverfügungstellung eines Epoxidharz-Härters, insbesondere eines Amin-Härters, und

d) Mischen der Komponenten b) und c) unter Ausbildung einer Härter-Komponente,

e) Mischen der Komponenten a) und d) unter Ausbildung einer Beschichtungszusammensetzung.

Durch Auftragen der gemäß Schritt e) des erfindungsgemäßen Verfahrens erhaltenen Beschichtungszusammensetzung auf eine Substratoberfläche unter Ausbildung eines Schichtauftrags und Aushärten der Beschichtungszusammensetzung gelangt man zu einer erfindungsgemäßen Beschichtung.

Besonders vorteilhaft ist auch, dass der nach dem vorangehend beschriebenen Verfahren mit der erfindungsgemäßen Beschichtungszusammensetzung erhaltene Schichtauftrag selbstnivellierend ist.

Wird die der Erfindung zugrunde liegt Aufgabe gelöst durch ein Beschichtungssystem auf einem Substrat zum Schutz vor elektrostatischer Entladung, umfassend in dieser Reihenfolge

a) ein Substrat mit einer beschichtbaren Substratoberfläche,

b) eine Grundierung,

c) eine nicht ableitfähige Kunstharzbeschichtung und

d) eine Erdungseinrichtung zur Erdung des Beschichtungssystems und

e) eine erfindungsgemäße elektrisch ableitfähige Beschichtung

Mit dem erfindungsgemäßen 2K-Beschichtungsset für die Herstellung elektrisch ableitfähiger Beschichtungen geht die überraschende Erkenntnis einher, dass diese effizient und kostengünstig hergestellt werden können und dass hiermit Beschichtungen zugänglich sind, in denen die Kohlenstoffnanoröhrchen sehr gleichmäßig verteilt vorliegen. Auch bleibt deren Funktionsfähigkeit, insbesondere deren Leitfähigkeit, über einen langen Zeitraum erhalten, welcher sogar den von der DIN EN 61340-5-1:2017-07 und DIN EN 61340-4-5:2019-04 festgelegten Anforderungen genügt, und zwar unabhängig von der Alterung und vom Raumklima. Darüber hinaus sind die erfindungsgemäßen Beschichtungen in einer hohen Farbtonvielfalt, insbesondere auch in hellen Farbtönen, zugänglich, trotz der intensiv dunklen Eigenfarbe der Kohlenstoffnanoröhrchen. Von Vorteil ist auch, dass die für ableitfähige Beschichtungen maßgeblichen Normen regelmäßig unabhängig von den klimatischen Umgebungsbedingungen erfüllt werden.

Die in der voranstehenden Beschreibung und den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

**Patentansprüche**

1.  2K-Beschichtungsset, umfassend

eine Epoxidharz-Komponente und
eine Härter-Komponente, enthaltend mindestens einen Epoxidharz-Härter und Single-Wall-Kohlenstoffnanoröhrchen und/oder Multi-Wall-Kohlenstoffnanoröhrchen, bevorzugt Single-Wall-Kohlenstoffnanoröhrchen und besonders bevorzugt Single-Wall-Kohlenstoffnanoröhrchen und keine Multi-Wall-Kohlenstoffnanoröhrchen.

2. 2K-Beschichtungsset nach Anspruch 1, **dadurch gekennzeichnet, dass** der Epoxidharz-Härter ein oder mehrere Amine sowie gegebenenfalls Additive, insbesondere Entschäumer, Beschleuniger und/oder Lösungsmittel umfasst.

3. 2K-Beschichtungsset nach Anspruch 2, **dadurch gekennzeichnet, dass** das Amin ausgewählt ist aus der Gruppe bestehend aus Aminoethylpiperazin (AEP), 1,3-Benzoldimethanamin (MXDA) und/oder Isophorondiamin (IPDA), 1,3-Diaminobenzol, Diethylentriamin, Triethylentetramin, Tetraethylenpentamin, 2,2,4-Trimethylhexamethylendiamin, 2,4,4-Trimethylhexamethylendiamin, 1,3-Bis(aminomethyl)cyclohexan, 4,4'-Methylenebis(cyclohexylamin), Poly[oxy(methyl-1,2-ethanediyl)], $\alpha$-(2-Aminomethylethyl)-$\omega$-(2-aminomethylethoxy)- (Jeffamine D-230) und deren beliebigen Mischungen.

4. 2K-Beschichtungsset nach einem der vorangehenden Ansprüche, **dadurch gekennzeichnet, dass** die Epoxidharz-Komponente gebildet ist aus den Komponenten Bisphenol, bevorzugt Bisphenol A und/oder Bisphenol F und besonders bevorzugt Bisphenol A und Bisphenol F, und mindestens einer Epoxidverbindung, insbesondere Epichlorhydrin.

5. 2K-Beschichtungsset nach einem der vorangehenden Ansprüche, **dadurch gekennzeichnet, dass** die Epoxidharz-Komponente Füllstoffe, Pigmente, Farbstoffe und/oder Fasern enthält.

6. 2K-Beschichtungsset nach einem der vorangehenden Ansprüche, **dadurch gekennzeichnet, dass** die Epoxidharz-Komponente Benzylalkohol und/oder Phenoxyethanol, insbesondere Benzylalkohol, enthält.

7. 2K-Beschichtungsset nach einem der vorangehenden Ansprüche, **dadurch gekennzeichnet, dass** die Epoxidharz-Komponente und/oder die Härter-Komponente, bevorzugt die Epoxidharz-Komponente und besonders bevorzugt die Epoxidharz-Komponente und nicht die Härter-Komponente, mindestens einen Reaktivverdünner enthalten.

8. 2K-Beschichtungsset nach einem der vorangehenden Ansprüche, **dadurch gekennzeichnet, dass** die Härter-Komponente erhaltbar oder gebildet ist durch Vermengen, insbesondere Dispergieren, der Single-Wall-Kohlenstoffnanoröhrchen und/ oder Multi-Wall-Kohlenstoffnanoröhrchen, insbesondere der Single-Wall-Kohlenstoffnanoröhrchen, mit dem mindestens einen Epoxidharz-Härter unter Ausbildung einer Suspension.

9. 2K-Beschichtungsset nach einem der vorangehenden Ansprüche, **dadurch gekennzeichnet, dass**

die Single-Wall-Kohlenstoffnanoröhrchen über eine durchschnittliche Länge, insbesondere absolute Länge, im Bereich von 1 bis 50 $\mu$m, bevorzugt 2 bis 40 $\mu$m, verfügen und/oder, insbesondere und, dass
die Single-Wall-Kohlenstoffnanoröhrchen über einen durchschnittlichen Durchmesser, insbesondere einen absoluten Durchmesser, von weniger als 10 nm, bevorzugt weniger als 6 nm und besonders bevorzugt im Bereich von 0,2 bis 5 nm, verfügen
und/oder dass
die Multi-Wall-Kohlenstoffnanoröhrchen über eine durchschnittliche Länge, insbesondere absolute Länge, im Bereich von 100 bis 500 $\mu$m, bevorzugt 150 bis 300 $\mu$m, verfügen und/oder, insbesondere und, dass
die Multi-Wall-Kohlenstoffnanoröhrchen über einen durchschnittlichen Durchmesser, insbesondere einen absoluten Durchmesser, im Bereich von 20 bis 80 $\mu$m, bevorzugt im Bereich von 30 bis 70 $\mu$m und besonders bevorzugt im Bereich von 40 bis 60 $\mu$m, verfügen.

10. 2K-Beschichtungsset nach einem der vorangehenden Ansprüche, **dadurch gekennzeichnet, dass** der Anteil der Single-Wall-Kohlenstoffnanoröhrchen in der Härter-Komponente, insbesondere der Aminhärter-Komponente, nicht oberhalb von 1,5 Gew.-%, bevorzugt nicht oberhalb von 0,5 Gew.-% und besonders bevorzugt nicht oberhalb von 0,1 Gew.-%, liegt, bezogen auf das Gesamtgewicht der Härter-Komponente.

11. Beschichtungszusammensetzung erhalten oder erhältlich durch Vermischen der Epoxidharz-Komponente und der mindestens einen Härter-Komponente des 2K-Beschichtungssets gemäß einem der vorangehenden Ansprüche, wobei diese Beschichtungszusammensetzung bevorzugt eine "Total Solid"-Beschichtungsmasse gemäß dem Prüfverfahren zur Bestimmung des Masseverlustes der Deutschen Bauchemie e.V. (nach DIN 16945, Ziffer 4.8 - Masseverlust) darstellt.

12. Beschichtungszusammensetzung nach Anspruch 11, **dadurch gekennzeichnet, dass** diese nicht mehr als 3000 ppm, bevorzugt nicht mehr als 1000 ppm und besonders bevorzugt nicht mehr als 250 ppm sowie insbesondere 30 bis 250 ppm, an Single-Wall-Kohlenstoffnanoröhrchen enthält.

**13.** Beschichtung, erhalten oder erhältlich durch Auftragen der Beschichtungszusammensetzung gemäß Anspruch 11 oder 12 auf eine Substratoberfläche.

**14.** Beschichtung nach Anspruch 13, **dadurch gekennzeichnet, dass** diese eine elektrisch ableitfähige Beschichtung darstellt.

**15.** Beschichtung nach Anspruch 13 oder 14, **dadurch gekennzeichnet, dass** diese eine Fußbodenbeschichtung darstellt.

**16.** Beschichtung nach einem der Ansprüche 13 bis 15, **gekennzeichnet durch** einen Helligkeitswert (Normfarbwert Y nach CIE) im Bereich von 1 bis 80, bevorzugt im Bereich von 3 bis 70 und besonders bevorzugt im Bereich von 5 bis 60, jeweils bestimmt gemäß Farbtonmessung nach CIELab, beschrieben in "Coloristik für Lackanwendungen", Tasso Bräule, 2012, Seiten 32 ff, Hannover, Deutschland, Vincentz Network.

**17.** Verwendung des 2K-Beschichtungssets nach einem der Ansprüche 1 bis 10 oder der Beschichtungszusammensetzung nach Anspruch 11 oder 12 für die Herstellung einer, insbesondere elektrisch ableitfähigen, Beschichtung, insbesondere Fußbodenbeschichtung.

**18.** Verfahren zur Herstellung einer Beschichtungszusammensetzung nach Anspruch 11 oder 12, umfassend die Schritte

    a) Zurverfügungstellung einer Epoxidharz-Komponente,
    b) Zurverfügungstellung von Single-Wall-Kohlenstoffnanoröhrchen und/oder Multi-Wall-Kohlenstoffnanoröhrchen, bevorzugt Single-Wall-Kohlenstoffnanoröhrchen und besonders bevorzugt Single-Wall-Kohlenstoffnanoröhrchen und keinen Multi-Wall-Kohlenstoffnanoröhrchen, insbesondere in Form einer Suspension in einem aprotischen polaren Lösungsmittel,
    c) Zurverfügungstellung eines Epoxidharz-Härters, insbesondere eines Amin-Härters, und
    d) Mischen der Komponenten b) und c) unter Ausbildung einer Härter-Komponente,
    e) Mischen der Komponenten a) und d) unter Ausbildung einer Beschichtungszusammensetzung.

**19.** Verfahren nach Anspruch 18, **dadurch gekennzeichnet, dass** die Suspension in Schritt b) 2 bis 20 Gew.-%, bevorzugt 5 bis 15 Gew.-%, an Single-Wall-Kohlenstoffnanoröhrchen und/oder Multi-Wall-Kohlenstoffnanoröhrchen, bevorzugt Single-Wall-Kohlenstoffnanoröhrchen, bezogen auf das Gesamtgewicht der Suspension, enthält.

**20.** Verfahren zur Herstellung einer Beschichtung nach einem der Ansprüche 13 bis 16, umfassend die Schritte
Auftragen der gemäß Schritt e) des Verfahrens nach Anspruch 18 oder 19 erhaltenen Beschichtungszusammensetzung auf eine Substratoberfläche unter Ausbildung eines, insbesondere selbstnivellierenden, Schichtauftrags und Aushärten der Beschichtungszusammensetzung.

**21.** Beschichtungssystem auf einem Substrat zum Schutz vor elektrostatischer Entladung, umfassend in dieser Reihenfolge

    a) ein Substrat mit einer beschichtbaren Substratoberfläche,
    b) eine Grundierung,
    c) eine nicht ableitfähige Kunstharzbeschichtung und
    d) eine Erdungseinrichtung zur Erdung des Beschichtungssystems und
    e) eine elektrisch ableitfähige Beschichtung nach einem der Ansprüche 13 bis 16.

**Claims**

**1.** 2K coating kit comprising

    an epoxy resin component and
    a hardener component containing at least one epoxy resin hardener and single-wall carbon nanotubes and/or multi-wall carbon nanotubes, preferably single-wall carbon nanotubes and particularly preferably single-wall carbon nanotubes and no multi-wall carbon nanotubes.

**2.** 2K coating kit according to claim 1, **characterized in that**
the epoxy resin hardener comprises one or more amines and optionally additives, in particular defoamers, accelerators and/or solvents.

**3.** 2K coating kit according to claim 2, **characterized in that**
the amine is selected from the group consisting of aminoethylpiperazine (AEP), 1,3-benzenedimethanamine (MXDA) and/or isophoronediamine (IPDA), 1,3-diaminobenzene, diethylenetriamine, triethylenetetramine, tetraethylenepentamine, 2,2,4-trimethylhexamethylenediamine, 2,4,4-trimethylhexamethylenediamine, 1,3-bis(aminomethyl)cyclohexane, 4,4'-methylenebis(cyclohexylamine), poly[oxy(methyl-1,2-ethanediyl)], $\alpha$-(2-aminomethylethyl)-$\omega$-(2-aminomethylethoxy)- (Jeffamine D-230) and any mixtures thereof.

4. 2K coating kit according to any of the preceding claims, **characterized in that** the epoxy resin component is formed from the components bisphenol, preferably bisphenol A and/or bisphenol F and particularly preferably bisphenol A and bisphenol F, and at least one epoxy compound, in particular epichlorohydrin.

5. 2K coating kit according to any of the preceding claims, **characterized in that** the epoxy resin component contains fillers, pigments, dyes and/or fibers.

6. 2K coating kit according to any of the preceding claims, **characterized in that** the epoxy resin component contains benzyl alcohol and/or phenoxyethanol, in particular benzyl alcohol.

7. 2K coating kit according to any of the preceding claims, **characterized in that** the epoxy resin component and/or the hardener component, preferably the epoxy resin component and particularly preferably the epoxy resin component and not the hardener component, contain at least one reactive diluent.

8. 2K coating kit according to any of the preceding claims, **characterized in that** the hardener component is obtainable or formed by mixing, in particular dispersing, the single-wall carbon nanotubes and/or multi-wall carbon nanotubes, in particular the single-wall carbon nanotubes, with the at least one epoxy resin hardener to form a suspension.

9. 2K coating kit according to any of the preceding claims, **characterized in that**

   the single-wall carbon nanotubes have an average length, in particular absolute length, in the range from 1 to 50 $\mu$m, preferably 2 to 40 $\mu$m, and/or, in particular and, **in that** the single-wall carbon nanotubes have an average diameter, in particular an absolute diameter, of less than 10 nm, preferably less than 6 nm and particularly preferably in the range from 0.2 to 5 nm,
   and/or **in that**
   the multi-wall carbon nanotubes have an average length, in particular absolute length, in the range from 100 to 500 $\mu$m, preferably 150 to 300 $\mu$m, and/or, in particular and, **in that** the multi-wall carbon nanotubes have an average diameter, in particular an absolute diameter, in the range from 20 to 80 $\mu$m, preferably in the range from 30 to 70 $\mu$m and particularly preferably in the range from 40 to 60 $\mu$m.

10. 2K coating kit according to any of the preceding claims, **characterized in that** the proportion of the single-wall carbon nanotubes in the hardener component, in particular the amine hardener component, is not above 1.5% by weight, preferably not above 0.5% by weight and particularly preferably not above 0.1% by weight, based on the total weight of the hardener component.

11. Coating composition obtained or obtainable by mixing the epoxy resin component and the at least one hardener component of the 2K coating kit according to any of the preceding claims, wherein this coating composition preferably represents a "Total Solid" coating composition according to the test method for determining the mass loss of Deutsche Bauchemie e.V. (according to DIN 16945, point 4.8-mass loss).

12. Coating composition according to claim 11, **characterized in that**
    it contains not more than 3000 ppm, preferably not more than 1000 ppm and particularly preferably not more than 250 ppm and in particular 30 to 250 ppm, of single-wall carbon nanotubes.

13. Coating, obtained or obtainable by applying the coating composition according to claim 11 or 12 to a substrate surface.

14. Coating according to claim 13, **characterized in that** this coating represents an electrically conductive coating.

15. Coating according to claim 13 or 14, **characterized in that**
    this coating represents a floor coating.

16. Coating according to any of claims 13 to 15, **characterized by**
    a brightness value (standard color value Y according to CIE) in the range from 1 to 80, preferably in the range from 3 to 70 and particularly preferably in the range from 5 to 60, in each case determined according to hue measurement according to CIELab, described in "Coloristik für Lackanwendungen", Tasso Bräule, 2012, pages 32 et seqq., Hannover, Germany, Vincentz Network.

17. Use of the 2K coating kit according to any of claims 1 to 10 or of the coating
    composition according to claim 11 or 12 for the production of a coating, in particular an electrically conductive coating, in particular a floor coating.

18. Method for producing a coating composition according to claim 11 or 12, comprising the steps of

    a) providing an epoxy resin component,
    b) providing single-wall carbon nanotubes and/or multi-wall carbon nanotubes, preferably single-wall carbon nanotubes and particularly preferably single-wall carbon nanotubes and no multi-wall carbon nanotubes, in particular in the form of a suspension in an aprotic polar solvent,

c) providing an epoxy resin hardener, in particular an amine hardener, and

d) mixing the components b) and c) to form a hardener component,

e) mixing the components a) and d) to form a coating composition.

19. Method according to claim 18, **characterized in that** the suspension in step b) contains 2 to 20% by weight, preferably 5 to 15% by weight, of single-wall carbon nanotubes and/or multi-wall carbon nanotubes, preferably single-wall carbon nanotubes, based on the total weight of the suspension.

20. Method for producing a coating according to any of claims 13 to 16, comprising the steps of applying the coating composition obtained according to step e) of the method according to claim 18 or 19 to a substrate surface to form a layer application, in particular a self-leveling layer application, and curing the coating composition.

21. Coating system on a substrate for protection against electrostatic discharge, comprising in this order

a) a substrate having a coatable substrate surface,

b) a primer,

c) a non-conductive synthetic resin coating and

d) an earthing device for earthing the coating system and

e) an electrically conductive coating according to any of claims 13 to 16.

## Revendications

1. Kit de revêtement 2K, comprenant

un composant résine époxy et

un composant durcisseur, contenant au moins un durcisseur de résine époxy et des nanotubes de carbone à paroi unique et/ou des nanotubes de carbone à parois multiples, de préférence des nanotubes de carbone à paroi unique et de manière particulièrement préférée des nanotubes de carbone à paroi unique et pas de nanotubes de carbone à parois multiples.

2. Kit de revêtement 2K selon la revendication 1, **caractérisé en ce que** le durcisseur de résine époxy comprend une ou plusieurs amines ainsi que le cas échéant des additifs, en particulier des antimousses, des accélérateurs et/ou des solvants.

3. Kit de revêtement 2K selon la revendication 2, **caractérisé en ce que** l'amine est choisie dans le groupe constitué par l'aminoéthylpipérazine (AEP), la 1,3-benzènediméthanamine (MXDA) et/ou l'isophoronediamine (IPDA), le 1,3-diaminobenzène, la diéthylènetriamine, la triéthylènetétramine, la tétraéthylènepentamine, la 2,2,4-triméthylhexaméthylènediamine, la 2,4,4-triméthylhexaméthylènediamine, le 1,3-bis(aminométhyl)cyclohexane, la 4,4'-méthylène-bis(cyclohexylamine), le poly[oxy(méthyl-1,2-éthanediyl)], l'$\alpha$-(2-aminométhyléthyl)-$\omega$-(2-aminométhyléthoxy)- (Jeffamine D-230) et leurs mélanges quelconques.

4. Kit de revêtement 2K selon l'une quelconque des revendications précédentes, **caractérisé en ce que** le composant résine époxy est formé à partir des composants bisphénol, de préférence bisphénol A et/ou bisphénol F et de manière particulièrement préférée bisphénol A et bisphénol F, et d'au moins un composé époxyde, en particulier l'épichlorhydrine.

5. Kit de revêtement 2K selon l'une quelconque des revendications précédentes, **caractérisé en ce que** le composant résine époxy contient des charges, des pigments, des colorants et/ou des fibres.

6. Kit de revêtement 2K selon l'une quelconque des revendications précédentes, **caractérisé en ce que** le composant résine époxy contient de l'alcool benzylique et/ou du phénoxyéthanol, en particulier de l'alcool benzylique.

7. Kit de revêtement 2K selon l'une quelconque des revendications précédentes, **caractérisé en ce que** le composant résine époxy et/ou le composant durcisseur, de préférence le composant résine époxy et de manière particulièrement préférée le composant résine époxy et non pas le composant durcisseur, contiennent au moins un diluant réactif.

8. Kit de revêtement 2K selon l'une quelconque des revendications précédentes, **caractérisé en ce que** le composant durcisseur peut être obtenu ou est formé en mélangeant, en particulier en dispersant, des nanotubes de carbone à paroi unique et/ou des nanotubes de carbone à parois multiples, en particulier des nanotubes de carbone à paroi unique, avec l'au moins un durcisseur de résine époxy avec formation d'une suspension.

9. Kit de revêtement 2K selon l'une quelconque des revendications précédentes, **caractérisé en ce que**

les nanotubes de carbone à paroi unique ont une longueur moyenne, en particulier une longueur absolue, dans la plage de 1 à 50 μm, de préférence de 2 à 40 μm, et/ou, en particulier et, **en ce que**
les nanotubes de carbone à paroi unique ont un diamètre moyen, en particulier un diamètre absolu, inférieur à 10 nm, de préférence inférieur à 6 nm et de manière particulièrement préférée dans la plage de 0,2 à 5 nm,
et/ou **en ce que**
les nanotubes de carbone à parois multiples ont une longueur moyenne, en particulier une longueur absolue, dans la plage de 100 à 500 μm, de préférence de 150 à 300 μm, et/ou, en particulier et, **en ce que**
les nanotubes de carbone à parois multiples ont un diamètre moyen, en particulier un diamètre absolu, dans la plage de 20 à 80 μm, de préférence dans la plage de 30 à 70 μm et de manière particulièrement préférée dans la plage de 40 à 60 μm.

10. Kit de revêtement 2K selon l'une quelconque des revendications précédentes, **caractérisé en ce que**
la proportion des nanotubes de carbone à paroi unique dans le composant durcisseur, en particulier le composant durcisseur amine, n'est pas supérieure à 1,5 % en poids, de préférence pas supérieure à 0,5 % en poids et de manière particulièrement préférée pas supérieure à 0,1 % en poids, par rapport au poids total du composant durcisseur.

11. Composition de revêtement obtenue ou pouvant être obtenue en mélangeant le composant résine époxy et l'au moins un composant durcisseur du kit de revêtement 2K selon l'une quelconque des revendications précédentes, cette composition de revêtement représentant de préférence une masse de revêtement « Total Solid » selon le procédé d'essai pour déterminer la perte de masse de la Deutsche Bauchemie e.V. (selon DIN 16945, chiffre 4.8 - perte de masse).

12. Composition de revêtement selon la revendication 11, **caractérisée en ce que** celle-ci ne contient pas plus de 3000 ppm, de préférence pas plus de 1000 ppm et de manière particulièrement préférée pas plus de 250 ppm ainsi qu'en particulier 30 à 250 ppm, de nanotubes de carbone à paroi unique.

13. Revêtement, obtenu ou pouvant être obtenu par application de la composition de revêtement selon la revendication 11 ou 12 sur une surface de substrat.

14. Revêtement selon la revendication 13, **caractérisé en ce que** celui-ci représente un revêtement électriquement conducteur.

15. Revêtement selon la revendication 13 ou 14, **caractérisé en ce que** celui-ci représente un revêtement de sol.

16. Revêtement selon l'une quelconque des revendications 13 à 15, **caractérisé par** une valeur de luminosité (valeur de couleur normalisée Y selon CIE) dans la plage de 1 à 80, de préférence dans la plage de 3 à 70 et de manière particulièrement préférée dans la plage de 5 à 60, à chaque fois déterminée selon une mesure de teinte selon CIELab, décrite dans « Coloristik für Lackanwendungen », Tasso Bräule, 2012, pages 32 et suivantes, Hanovre, Allemagne, Vincentz Network.

17. Utilisation du kit de revêtement 2K selon l'une quelconque des revendications 1 à 10 ou de la composition de revêtement selon la revendication 11 ou 12 pour la fabrication d'un revêtement, en particulier électriquement conducteur, en particulier d'un revêtement de sol.

18. Procédé de fabrication d'une composition de revêtement selon la revendication 11 ou 12, comprenant les étapes

a) de fourniture d'un composant résine époxy,
b) de fourniture de nanotubes de carbone à paroi unique et/ou de nanotubes de carbone à parois multiples, de préférence de nanotubes de carbone à paroi unique et de manière particulièrement préférée de nanotubes de carbone à paroi unique et pas de nanotubes de carbone à parois multiples, en particulier sous forme d'une suspension dans un solvant polaire aprotique,
c) de fourniture d'un durcisseur de résine époxy, en particulier d'un durcisseur amine, et
d) de mélange des composants b) et c) avec formation d'un composant durcisseur,
e) de mélange des composants a) et d) avec formation d'une composition de revêtement.

19. Procédé selon la revendication 18, **caractérisé en ce que**
la suspension dans l'étape b) contient 2 à 20 % en poids, de préférence 5 à 15 % en poids, de nanotubes de carbone à paroi unique et/ou de nanotubes de carbone à parois multiples, de préférence de nanotubes de carbone à paroi unique, par rapport au poids total de la suspension.

20. Procédé de fabrication d'un revêtement selon l'une quelconque des revendications 13 à 16, comprenant les étapes

d'application de la composition de revêtement obtenue selon l'étape e) du procédé selon la revendication 18 ou 19 sur une surface de substrat avec formation d'une application de couche, en particulier auto-nivelante, et durcissement de la composition de revêtement.

21. Système de revêtement sur un substrat pour la protection contre les décharges électrostatiques, comprenant dans cet ordre

a) un substrat avec une surface de substrat pouvant être revêtue,
b) une sous-couche,
c) un revêtement en résine synthétique non conducteur et
d) un dispositif de mise à la terre pour la mise à la terre du système de revêtement et
e) un revêtement électriquement conducteur selon l'une quelconque des revendications 13 à 16.

**EP 4 202 001 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3670470 A1
- RU 2654759 C1
- EP 3652252 B1

- EP 2755451 A1
- EP 2944162 B1
- DE 102018009794 A1